# EUROPEAN PATENT SPECIFICATION

(11) **EP 1 446 268 B1**
(45) Date of publication and mention of the grant of the patent: **13.08.2008**
(21) Application number: 02786298.6
(22) Date of filing: 21.10.2002
(51) Int. Cl.: B25J 15/04

(54) **AN APPARATUS AND PROCEDURE FOR ATTACHMENT OF A TOOL ON A TOOL ATTACHMENT PLATE ON AN INDUSTRIAL ROBOT**
VORRICHTUNG UND VERFAHREN ZUR BEFESTIGUNG EINES WERKZEUGS AN EINER WERKZEUGMONTAGEPLATTE AN EINEM INDUSTRIEROBOTER
APPAREIL ET PROCEDE PERMETTANT DE FIXER UN OUTIL SUR UNE PLAQUE DE FIXATION D'OUTIL D'UN ROBOT INDUSTRIEL

(30) Priority: 19.10.2001 SE 0103523
(43) Date of publication of application: 18.08.2004
(73) Proprietor: ABB AB, 721 83 Västerås (SE)
(72) Inventor: LINDEVALL, Mattias, S-723 37 Vasteras (SE); LUTHARDT, Colin, S-723 49 Vasteras (SE); ARANIUS, Jimmy, S-722 33 Vasteras (SE)
(86) International application number: PCT/SE2002/001919
(87) International publication number: WO 2003/033220

(56) References cited:
- WO-A1-99/50032
- GB-A- 2 120 634
- US-A- 4 867 595
- US-A- 5 018 901
- US-A- 5 044 063
- US-A- 5 380 117

## Description

### TECHNICAL FIELD

The present invention relates to an industrial robot comprising a control system and a manipulator with a tool and a method for such an industrial robot. The invention especially relates to a manipulator with a plurality of arms which are movable relative to each other and which include a tool attachment for attachment of the tool. In particular, the invention relates to a manipulator with a turn disk including the tool attachment.

### BACKGROUND ART

Most industrial robots are intended to work with a tool that is supported by a manipulator. Such a tool is attached to the outer arm of the manipulator and may include a plurality of operating possibilities. These tools often have a considerable weight, which implies that the mounting of the tool to the manipulator entails complicated and heavy work. The mounting work also comprises operations that require very high precision during the mounting. It is a condition for the subsequent work with the manipulator that a correct position for the tool is obtained.

According to WO 99/50032, a device for attaching a tool to a manipulator is previously known. The task of the known device is to offer simpler mounting which entails a minimum of downtime for a process. Despite the rapid mounting, the method involves an operation when the tool has to be kept in place and at the same time in the correct position while a fixing member is being applied. It is thus desirable to eliminate the need to have to support and guide the tool simultaneously during the mounting.

In the process industry, a plurality of solutions for automatic tool changing are known. These systems often comprise a device for centring and guiding the tool as well as a system for automatic locking of the tool to the robot. The known systems often provide inferior precision and involve an extensive and costly system for the actual tool-changing operation. The automatic systems must also include functions and magazines for storing and handling tools that are not in operation. When attaching heavier tools, the automatic systems are not suitable since such tools often also require an extensive connection of process media, such as current, control signals, cooling liquids, etc.

From GB 2 120 634 A, a coupling between a robot and a tool is previously known for automatic tool changing without the intervention of an operator. The task of the known coupling is to provide a simple, light and reliable detachable coupling for this purpose. The coupling comprises a first part that is attached to the robot and a second part that is attached to the tool. The first part comprises a locking device in the form of a pneumatic piston with a transverse pin that is adapted to penetrate an elongated hole provided in the second part. After the piston has penetrated the hole, the first part is oriented in relation to the second part by rotating the first part in relation to the second part. During this rotary movement, also the transverse pin is given such a position that, during a tightening movement of the piston, the pin will rest against the rear side of the first part. The locking operation is then completed by bringing the piston, by the force from the pneumatic arrangement, to pull the second part towards it.

The known device thus requires process media, in the form of pneumatics, to function. The known method also means that the tool is first oriented and then hooked and locked. The known coupling and method are thus not suited for attaching a heavy tool with great precision.

### SUMMARY OF THE INVENTION

The object of the present invention is to suggest ways and means of providing a method and a device which, when mounting a tool on a manipulator, simplify the work of the operator and relieve the operator of the weight of the tool itself. Another object of the invention is to offer a simple and cost-effective system for manual mounting of a tool.

These objects are achieved according to the invention by an industrial robot according to claim 1 and with a method according to the independent method claim 6. Advantageous embodiments are described in the characterizing portions of the dependent claims.

According to the invention, the manipulator comprises a tool attachment including a member for supporting the tool before it is fixed to the manipulator. The supporting member is adapted to carry the weight of the tool such that the manipulator supports the tool during the mounting. The work is carried out in such a way that the tool is lifted by the operator and hooked onto the supporting member. The lifting operation may be carried out completely manually or with a lifting device such as, for example, a crane or a travelling crane. The operation can also be carried out by hooking the robot onto the tool and by lifting the tool to an operator position for fixing. At the same moment that the tool is hooked onto the supporting member, the weight of the tool is transferred to the manipulator. Thus, any lifting devices may then be immediately removed and the tool be completely freely accessible for the mounting work. The continued work comprises centring the tool to a predetermined position and fixing it, in this position, to the tool attachment and hence to the manipulator.

According to the invention, the supporting member comprises a hook that is fixed to a first structural part and an aperture that is adapted to receive the hook arranged in a second structural part. Here, the first structural part may be the tool attachment and the second structural part the actual tool, or inversely. The designation hook is here to be given a broad meaning of a member adapted to be detachably attached to another member. Thus, a hook may be an elongated object that is partly curved. A hook also comprises a stud with a lower part and a head where the dimension of the head is larger than that of the lower part. The designation aperture for the reception of the hook is also to be given a broad meaning of a hole or a slot that completely or partly surrounds the hook. The function of the aperture is to allow introducing the hook in an unloaded state but to prevent the hook from being pulled out, under loading, through the aperture.

To assist in the centring of the tool, according to the invention, the tool attachment comprises one or more guide members. In one embodiment, this is implemented by means of a stud, which is adapted to fit into a hole. The stud is thus arranged in a first structural part, which may be the tool, and the hole in a second structural part, which may be the tool attachment. The stud is thus arranged either in the tool or in the tool attachment. The hole corresponding to the stud is arranged in the structural part opposite to the stud. In an advantageous embodiment, the stud is made slightly conical, whereby the structural parts, when being brought together, are allowed to be displaced relative to each other in the lateral direction so as to achieve the correct position when the stud has completely penetrated the hole. The penetration of the stud here means that the structural parts, by the force between the stud and the hole, simultaneously with the threading on, are displaced to the desired position.

In another embodiment, the guide member is designed to form a so-called dovetail joint, in which case the joint at the same time acts as the supporting member. In a further embodiment, either the tool or the tool attachment includes studs which are provided with heads and which are inserted into corresponding holes comprising a round section and an elongated section, usually referred to as "keyholes". In this embodiment, the tool is first brought to be supported by the studs provided with heads. The tool is then brought to adopt the correct position through a rotational operation, whereby the studs penetrate into the narrower part of the keyholes. In one preferred embodiment, the elongated part of the holes is arranged wedge-shaped in the direction of rotation.

The invention also comprises a coupling, by which the tool in its correct position is fixed to the manipulator. According to a preferred embodiment, the coupling comprises a mechanical joint, whereby a surrounding ring comprising two semicircular parts is brought, by tensioning, to fix the tool to the tool attachment. The tool and the tool attachment are adapted to meet each other with a respective disc with the same diameter. Those edges of the discs which are facing away from each other are chamfered. A coupling comprising a clamping ring with a trapezoidal inner groove is brought to surround the two discs. The trapezoidal surfaces of the grooves grip over the chamfered edges of the discs like a key joint and bring the discs to be pressed against each other when the ring applies a surrounding force around the discs. In one embodiment, the ring halves are equipped with flanges at their ends. A coupling brings the flanges of the two halves against each other, whereby the surrounding force arises. In one embodiment, the coupling is a screw joint and in another an eccentric lock in which a small lever arm first clamps the clamping ring and then fixes it.

In an additional embodiment, the coupling is in the form of a plurality of studs arranged in one of the plates, which studs penetrate into holes in the other plate. The studs are provided with tapering webs limited by accurately adjusted conical portions. When the studs are inserted into the holes, a pin adapted for each stud is brought, in a plane normal to the stud, to penetrate into and make contact with the web. In a further embodiment, the coupling is a screw joint that directly clamps the two plates together.

In still another embodiment, the tool attachment comprises a locking device that prevents the hook from loosening. Such a locking device comprises, for example, a pin that is arranged in a direction transversely to the extent of the hook and hence blocks the possibility of the hook to move. In another embodiment, the locking device comprises a catch device which, after the hook has reached its supporting position, is folded out and prevents the supported part from moving.

In case of special tools, such as, for example, a spot welding gun, fault currents, traversing the manipulator, sometimes arise. These fault currents often lead to damage, above all in bearings. The damage arises as recesses in bearing races and leads to extensive and time-consuming repair work. In an additional embodiment, therefore, the tool is galvanically separated from the manipulator. An insulating barrier is then arranged at the section between the tool and the manipulator. In an advantageous embodiment, this barrier is arranged as a disc of insulating material between the tool and the tool attachment. In another advantageous embodiment, the barrier is arranged as an insulating coupling between the turn disc and the tool attachment.

### BRIEF DESCRIPTION OF THE DRAWING

The invention will be explained in greater detail by description of embodiments with reference to the accompanying drawing, wherein
Figure 1 is a device according to the invention comprising a tool attachment, belonging to a manipulator (not shown), said tool attachment having a hook for relieving and a guide pin for guiding, and an only partly shown tool,
Figure 2 is an advantageous embodiments of the device with a groove,
Figure 3 is another embodiment of the device with two supporting and guide pins penetrating two corresponding "keyholes",
Figure 4 is a further embodiment of the device with a centre stud and a guide pin,
Figure 5 is an additional embodiment of the device with a dovetail joint,
Figure 6 is still another embodiment of the device with a dovetail joint,
Figure 7 is yet another embodiment of the device with a screw joint,
Figure 8 is a further embodiment of the invention with studs provided with webs with transverse pins for fixing,
Figure 9 is an embodiment of the device with a locking device in the form of a pin preventing the hook from loosening,
Figure 10 is an embodiment of the device with a locking device in the form of a catch preventing the hook from loosening,
Figure 11 is an embodiment of the device with a locking device in the form of a pin preventing the hook from loosening, and
Figure 12 is an embodiment of the device with a locking device in the form of a stud penetrating a hole that prevents the hook from loosening

### DESCRIPTION OF THE PREFERRED EMBODIMENT

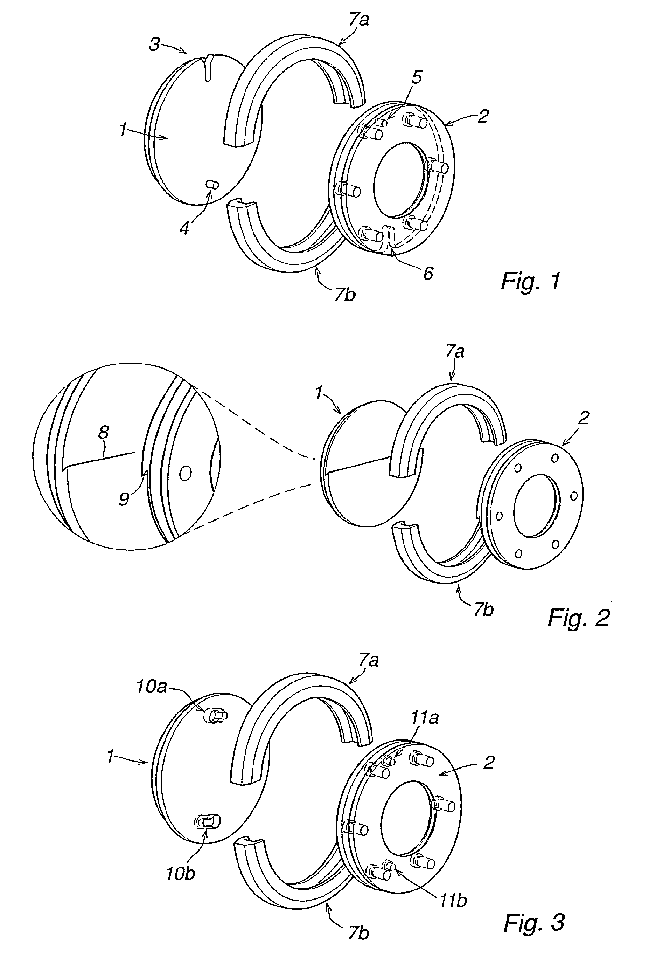

The device according to Figure 1 comprises a tool attachment 1 that is an integrated part of the outermost arm of a manipulator (not shown) that together with a control system constitutes an industrial robot. Further, the device comprises a tool 2, which in the figure is exemplified by a circular plate. In the example shown, the tool attachment comprises a slot 3 and a guide spindle 4. The tool comprises, partly concealed, a hook 5 and a hole 6. In a first step, the hook 5 is adapted to engage with the slot 3 such that the whole weight of the tool is brought to be supported by the tool attachment. In a second step, the guide spindle 4 is adapted to be inserted into the hole 6, such that the tool is centred into the right position relative to the operating point of the manipulator. In an advantageous embodiment, the hook exhibits a bent outer part which is brought to hook into the rear side of the slot. In the example the slot has parallel sides with a trumpet-shaped opening to facilitate receiving the hook. However, the groove may, of course, also be slightly conical to assist in centring the tool. Similarly, instead of having a bent outer part, the hook may be provided with a head with a larger diameter than the slot so that this head prevents the hook from sliding through the slot.

The tool attachment 1 and the tool 2 are shown in the example as circular plates of equal size. Each plate has a chamfered edge so that the plates, when being assembled, exhibit a common trapezoidal edge portion. A clamping ring 7 in two halves 7a and 7b are adapted to grip over the trapezoidal edge portion. To this end, the inner side of the clamping ring is designed with a trapezoidal groove with a narrower shape such that, like a key joint, it surrounds the edges of the two discs with clamping force. Thus, when the tool is suspended, such that its weight is supported by the manipulator, and centred, such that the operating point of the tool coincides with the operating point of the manipulator, the coupling is fixed by the clamping ring 7. The two halves 7a and 7b of the clamping ring are pressed against each other with a screw joint or the like.

The device of Figure 2 includes the same parts as in Figure 1 but here the tool attachment 1 comprises a recess that forms a first hook line 8 arranged across the disc. In a corresponding way, the tool comprises a second hook line 9 that is adapted to engage with the first hook line. The hook lines are arranged in this example to form a coupling where, in a first step, the weight of the tool is transferred to the manipulator and where, in a second step, the tool is brought, by sliding between the hook lines, to be centred and finally fixed with the clamping ring 7.

The device of Figure 3 also includes the same parts as in Figure 1. In this example, the tool attachment comprises two key-shaped holes 10a and 10b. Intended to be inserted into these holes, the tool comprises two studs 11a and 11b (concealed in the example), each having a head with a larger diameter than the stud itself. When mounting, the studs are thus inserted into the corresponding holes, whereby the weight is transferred. In a second step, the tool is centred by rotating the tool such that the studs slide into the narrower part of the keyhole. Fixing is performed as above.

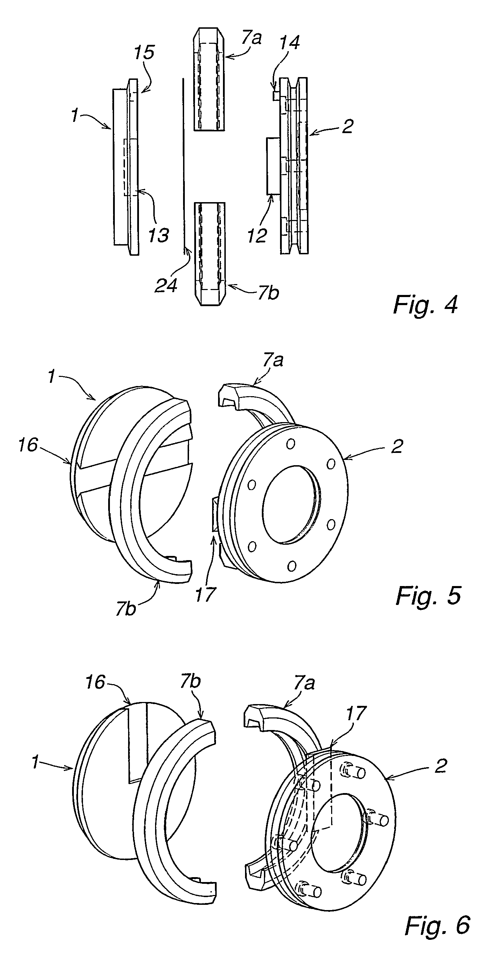

The device of Figure 4 shows a further embodiment of the invention with the same parts as in Figure 1. Here, the tool 2 comprises a supporting member in the form of a coarse stud 12. For receiving this stud, the tool attachment comprises a hole 13. In this example, the tool also comprises a guide spindle 14 adapted to penetrate into a hole 15 comprised in the tool attachment. The device shown also comprises an insulating barrier in the form of a disc 24 of an insulating material that galvanically separates the tool from the manipulator. Also the guide spindle and the clamping ring must, in this embodiment, be manufactured of insulating material.

A further example is the device of Figure 5 in which the supporting member and the guide member consist of a dovetail joint. Here, the tool attachment comprises a dovetail slot 16 in the form of an elongated recess with a wider bottom than the orifice. The tool comprises a dovetail 17 in the form of a projecting portion with two opposing plane sides, diverging outwardly. The mounting is performed such that the dovetail is introduced from the side into the dovetail slot. When the dovetail has been inserted a certain distance, the manipulator assumes the weight of the tool. Then the tool is moved laterally so as to be centred, whereupon it is fixed. An additional variant of the device with a dovetail joint is shown in Figure 6. Here, the parts have the same designations as in Figure 5. The difference is that the dovetail joint is only arranged along part of the tool and the tool attachment, respectively. This means that the mounting is made from above.

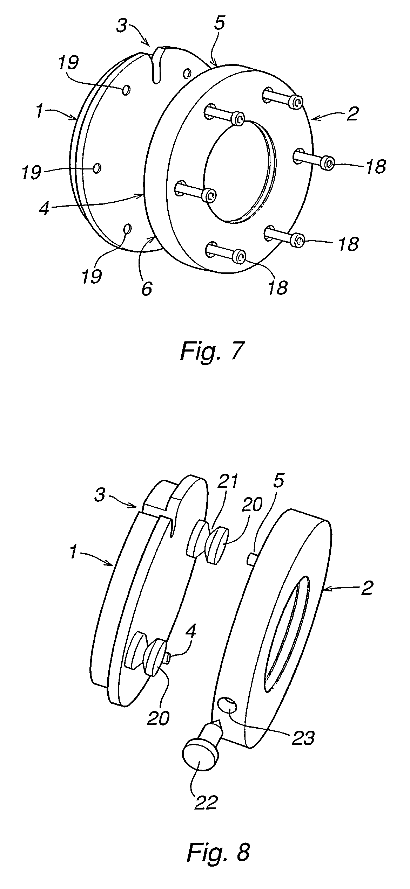

The device according to Figure 7 shows a coupling comprising a plurality of screws 18 that are arranged in holes in the tool and that are each engaged with a threaded hole 19 in the tool attachment. Otherwise, the embodiment corresponds to that shown in Figure 1. The supporting of the tool is thus attended to by a hook 5 that engages into the slot 3. The centring is attended to by a hole 6 provided in the tool, the hole being adapted to receive a guide spindle 4 arranged in the tool attachment.

Figure 8 shows the device with a different design of a coupling. Two studs 20 with a trapezoidal web 21 are arranged in the tool attachment. Corresponding holes (concealed) are arranged in the tool. In the same way as in Figure 1, the device is provided with a hook 5 and a guide spindle 4 for supporting and centring the tool. During mounting, the studs 20 are inserted into the corresponding holes. The tool comprises a pin 22 arranged on either side and running in a normal plane to holes 23 provided for the studs. Each pin is adapted to penetrate from the side into the stud 20 and to make contact with the web 21 of the stud, thus obtaining fixing.

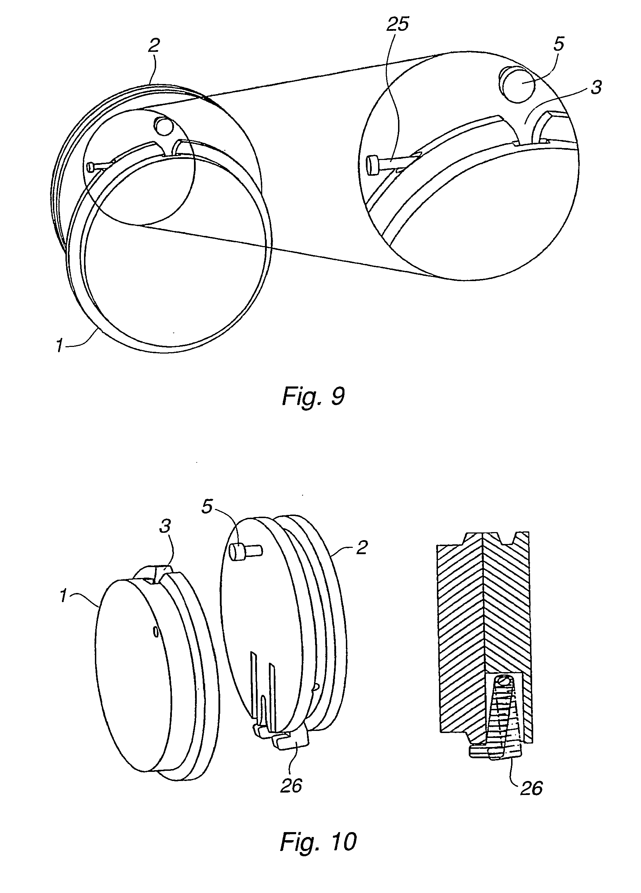

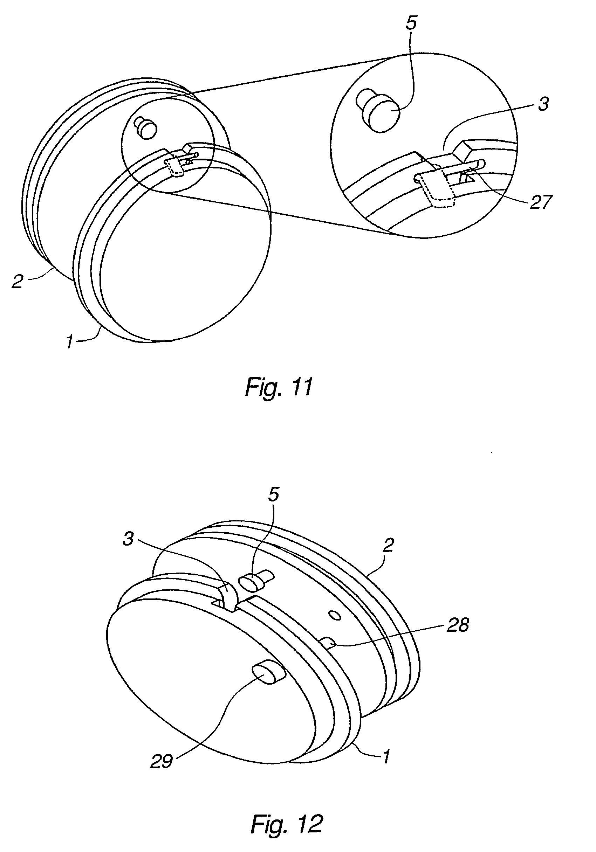

For safety reasons it is of great interest that the tool be retained in its lifted position, even if the robot, inadvertently or through malfunction, should happen to rotate the turn disc. Figures 9 and 12 show a plurality of embodiments of a locking device that prevent the hook from loosening. Figure 9 shows a hook 5 that, after having penetrated into the groove 3, is locked by a pin 25. In Figure 10, the locking device is instead shaped as a catch device 26 that, when being unfolded, grasps the lower edge of the first part 1. An additional example of a locking device is shown in Figure 11 where a pin provided with a handle is arranged in a groove where it locks the movement of the hook. Finally, Figure 12 also shows a further solution where the locking operation is achieved in that a stud 28 in the second part 2, when fastening the hook 5, penetrates into a hole 29 in the first part.

Although advantageous, the invention is not limited to the embodiments shown. Thus, the various parts of the device may, for example, be made from a plurality of different materials. The design of the supporting device, the centring device and the locking device may also adopt various embodiments with regard to design and material choice.

## Claims

1. An industrial robot comprising a manipulator provided with a tool (2) and including a plurality of arms, movable relative to each other, a tool attachment (1), and a coupling (7; 18, 19; 21, 22) that secures the tool to the manipulator, whereby the tool attachment (1) comprises a supporting member (3, 8, 10, 13, 16) that supports the tool (2) and a guide member (4, 8, 10, 13, 16) for centring the tool during mounting, and that the tool (2) comprises a supporting member (5, 9, 11, 12, 17) and a guide member (6, 9, 11, 14, 17) arranged such that the tool attachment and the tool are, during relative displacement, displaced to the desired hooking position prior to being secured by the coupling.

2. An industrial robot according to claim 1, wherein the supporting member of the tool comprises a hook (5, 9, 11, 12, 17) and the supporting member of the tool attachment comprises an opening (3, 8, 10, 13, 16).

3. An industrial robot according to claims 1 or 2, wherein the guiding member of the tool attachment comprises a stud (4, 8) and the guide member of the tol comprises a hole (6, 9).

4. An industrial robot according to any of the preceding claims, wherein the tool attachment comprises a locking device (25, 26, 27; 29, 29) whereby the supporting member (3, 5; 8, 9; 10, 11; 12, 13; 16, 17) is prevented from leaving its supporting position.

5. An industrial robot according to any of the preceding claims, wherein the tool attachment (1) comprises an insulating barrier (24) that galvanically separates the tool from the manipulator.

6. A method for mounting a tool (2) to a tool attachment (1) of an industrial robot comprising a plurality of arms, movable relative to each other, the method comprising:
attaching the tool attachment onto the tool by means of a supporting member (3, 8, 10, 13, 16) comprised in the tool attachment hooking a supporting member (5, 9, 11, 12, 17) comprised in the tool, and simultaneously centring the tool attachment by means of a guide member (4, 8, 10, 13, 16) comprised in the tool attachment hooking a guide member (6, 9, 11, 14, 17) comprised in the tool during lateral displacement of the tool attachment relative the tool to a desired position,
lifting the tool to an operator position by the robot, and
fixing the tool to the tool attachment by attaching a coupling (7; 18, 19; 21, 22) that secures the tool to the manipulator.

7. A method according to claims 10-11, wherein the supporting member (3, 5; 8, 9; 10, 11; 12, 13; 16, 17) is locked in its supporting position by a locking device (25, 26, 27; 28, 29).

8. Use of an industrial robot according to claims 1-5 or a method according to claims 6-7 for mounting of a tool in a welding process plant.

## Patentansprüche

1. Industrieroboter, umfassend einen Manipulator, welcher mit einem Werkzeug (2) versehen ist und mehrere Arme einschließt, die relativ zueinander beweglich sind, eine Werkzeug-Anbringung (1) und eine Kupplung (7; 18, 19; 21, 22), die das Werkzeug an dem Manipulator sichert, wobei die Werkzeug-Anbringung (1) ein Träger-Element (3, 8, 10, 13, 16), welches das Werkzeug (2) trägt, und ein Führungs-Element (4, 8, 10, 13, 16) umfasst, um das Werkzeug während des Zusammenbaus zu zentrieren und das Werkzeug (2) ein Träger-Element (5, 9, 11, 12, 17) und ein Führungs-Element (6, 9, 11, 14, 17) umfasst, welches derart angeordnet ist, dass die Werkzeug-Anbringung und das Werkzeug, während einer relativen Verschiebung, zu der erwünschten Eingreif-Position verschoben werden, vor dem Sichern durch die Kupplung.

2. Industrieroboter nach Anspruch 1, wobei das Träger-Element des Werkzeugs eine Eingreif-Einrichtung (5, 9, 11, 12, 17) umfasst und das Träger-Element der Werkzeug-Anbringung eine Öffnung (3, 8, 10, 13, 16) umfasst.

3. Industrieroboter nach Anspruch 1 oder 2, wobei das Führungselement der Werkzeug-Anbringung einen Zapfen (4, 8) und das Führungselement des Werkzeugs ein Loch (6, 9) umfasst.

4. Industrieroboter nach einem der vorhergehenden Ansprüche, wobei die Werkzeug-Anbringung eine Arretierungs-Vorrichtung (25, 26, 27; 29, 29) umfasst, wobei das Träger-Element (3, 5; 8, 9; 10, 11; 12, 13; 16, 17) daran gehindert wird, seine Träger-Position zu verlassen.

5. Industrieroboter nach einem der vorhergehenden Ansprüche, wobei die Werkzeug-Anbringung (1) ein Isoliersperre (24) umfasst, welches das Werkzeug galvanisch von dem Manipulator trennt.

6. Verfahren zum Anbringen eines Werkzeugs (2) an einer Werkzeug-Anbringung (1) eines Industrieroboters, umfassend mehrere Arme, die relativ zueinander beweglich sind, wobei das Verfahren umfasst:
- Anbringen der Werkzeug-Anbringung an dem Werkzeug mittels eines TrägerElements (3, 8, 10, 13, 16), welches in der Werkzeug-Anbringung enthalten ist, welches in ein Träger-Element (5, 9, 11, 12, 17), das in dem Werkzeug enthalten ist, eingreift und gleichzeitig Zentrieren der Werkzeug-Anbringung mittels eines Führungs-Elements (4, 8, 10, 13, 16), welches in der Werkzeug-Anbringung enthalten ist, welches in ein Führungs-Element (6, 9, 11, 14, 17) eingreift, welches in dem Werkzeug enthalten ist, während einer Längs-Verschiebung der Werkzeug-Anbringung relativ zu dem Werkzeug zu einer erwünschten Position,
- Heben des Werkzeugs zu einer Arbeitsposition durch den Roboter; und
- Fixieren des Werkzeugs an der Werkzeug-Anbringung du rch Anbringen einer Kupplung (7; 18, 19; 21, 22), die das Werkzeug an den Manipulator sichert.

7. Verfahren nach einem der Ansprüche 10-11, wobei das Träger-Element (3, 5; 8, 9; 10, 11; 12, 13; 16, 17) durch eine Arretierungs-Vorrichtung (25, 26, 27; 28, 29) in seiner Träger-Position arretiert wird.

8. Verwendung eines Industrie-Roboters nach den Ansprüchen 1-5 und eines Verfahrens nach den Ansprüchen 6-7 zum Anbringen eines Werkzeugs in einer Schweiß-Anlage.

## Revendications

1. Robot industriel comprenant un manipulateur pourvu d'un outil (2) et incluant une pluralité de bras, mobiles les uns par rapport aux autres, une fixation d'outil (1), et un couplage (7; 18, 19; 21, 22) qui fixe l'outil sur le manipulateur, dans lequel la fixation d'outil (1) comprend un élément de support (3, 8, 10, 13, 16) qui support l'outil (2) et un élément de guidage (4, 8, 10, 13, 16) pour centrer l'outil pendant le montage, et l'outil (2) comprend un élément de support (5, 9, 11, 14, 17) agencé de telle manière que la fixation d'outil et l'outil sont, pendant le déplacement relatif, déplacés vers la position d'accrochage souhaitée avant d'être fixés par le couplage.

2. Robot industriel selon la revendication 1, dans lequel l'élément de support de l'outil comprend un crochet (5, 9, 11, 12, 17) et l'élément de support de la fixation d'outil comprend une ouverture (3, 8, 10, 13, 16).

3. Robot industriel selon la revendication 1, dans lequel l'élément de guidage de la fixation d'outil comprend un tenon (4, 8) et l'élément de guidage de l'outil comprend un trou (6, 9).

4. Robot industriel selon l'une quelconque des revendications précédentes, dans lequel la fixation d'outil comprend un dispositif de blocage (25, 26, 27 ; 29, 29) moyennant quoi l'élément de support (3, 5 ; 8, 9; 10, 11; 12, 13; 16, 17) est empêché de quitter sa position de support.

5. Robot industriel selon l'une quelconque des revendications précédentes, dans lequel la fixation d'outil (1) comprend une barrière d'isolation (24) qui sépare galvaniquement l'outil du manipulateur.

6. Procédé pour monter un outil (2) sur une fixation d'outil (1) d'un robot industriel comprenant une pluralité de bras mobiles les uns relativement aux autres, le procédé comprenant de :
fixer la fixation d'outil sur l'outil au moyen d'un élément de support (3, 8, 10, 13, 16) compris dans la fixation d'outil accrocher l'élément de support (5, 9, 11, 12, 17) compris dans l'outil, et simultanément centrer la fixation d'outil au moyen d'un élément de guidage (4, 8, 10, 13, 16) compris dans la fixation d'outil accrocher un élément de guidage (6, 9, 11, 14, 17) compris dans l'outil pendant le déplacement latéral de la fixation d'outil par rapport à l'outil dans une position souhaitée,
soulever l'outil vers une position de l'opérateur par le robot, et
fixer l'outil sur la fixation d'outil en attachant un couplage (7; 18, 19; 21, 22) qui fixe l'outil sur le manipulateur.

7. Procédé selon les revendications 10-11, dans lequel l'élément de support (3,5 ; 8, 9; 10, 11; 12, 13; 16, 17) est bloqué dans sa position de support par un dispositif de blocage (25, 26, 27 ; 29, 29).

8. Utilisation d'un robot industriel selon les revendications 1-5 ou procédé selon les revendications 6-7 pour le montage d'un outil dans une installation de soudage.
